# EUROPEAN PATENT APPLICATION

(11) **EP 4 420 936 A1**
(43) Date of publication of application: **28.08.2024**
(21) Application number: 21961219.9
(22) Date of filing: 07.12.2021
(51) Int. Cl.: B60R 16/02, G10L 15/22, H04M 1/72457

(54) **POSITION-BASED VOICE INTERACTION METHOD AND SYSTEM**

(30) Priority: 22.10.2021 CN 202111233280
(71) Applicant: PATEO CONNECT+ Technology (Shanghai) Corporation, Shanghai 201821 (CN)
(72) Inventor: ZHANG, Yu, Shanghai 201821 (CN)
(74) Representative: Ziebig Hengelhaupt Intellectual Property Attorneys Patentanwaltskanzlei PartGmbB
(86) International application number: PCT/CN2021/136137
(87) International publication number: WO 2023/065481

(57) **Abstract**

A position-based audio interaction method includes, in response to detecting that a relative position relationship between an electronic device and a target vehicle meets a predetermined condition, generating an action detection instruction. The action detection instruction indicates detection of a user action, and the target vehicle includes at least one external speaker. The method further includes, in response to detecting a predetermined activation action of a user, generating a sound collection instruction. The sound collection instruction indicates collection of a sound signal of the user. The method further includes performing the sound collection instruction to collect and send the sound signal to an onboard controller corresponding to the target vehicle and outputting the collected sound signal by the at least one external speaker.

## Description

### TECHNICAL FIELD

The present disclosure relates to the vehicle audio interaction technology field and, more particularly, to a position-based audio interaction method and a position-based audio interaction system.

### BACKGROUND

The human-machine interaction in automobiles refers to an information exchange process through a certain interaction method between a human and a vehicle, which directly affects the user experience. The interaction method includes in-vehicle cabin interaction and outside-vehicle interaction.

In the in-vehicle cabin interaction between the vehicle and the user, the user is in the vehicle cabin and interacts with the vehicle through audio or touch screen control. The in-vehicle speaker outputs and plays related audio.

In the outside vehicle interaction between the vehicle and the user, the user sends information from a remote end through a cell phone to control the vehicle according to user needs.

When the user needs to use the vehicle speaker as an audio output device, the in-vehicle cabin interaction is used. Currently, the user cannot directly interact with the vehicle from outside the vehicle with audio.

### SUMMARY

A purpose of the present disclosure is to provide position-based audio interaction method and system. The advantage includes that within the vehicle predetermined distance range, the user sound can be collected by the electronic device or the related member of the electronic device according to the user operation can be output and played through the external speaker carried by the vehicle. Thus, based on a vehicle sound expansion system, the vehicle can have the audio play function to outside.

Another purpose of the present disclosure is to provide position-based audio interaction method and system. The advantage includes that within the vehicle predetermined distance range, when the user is determined to have the audio interaction needs, the user sound can be collected and the vehicle can be wakened up to output and play the audio. Thus, based on a vehicle sound expansion system, the power consumption of the vehicle can be reduced.

Another purpose of the present disclosure is to provide position-based audio interaction method and system. The advantage includes that within the vehicle predetermined distance range, according to the relative position of the user and the vehicle, the corresponding external speaker can be selected to output the user sound information to accurately control the sound expansion direction.

Another purpose of the present disclosure is to provide position-based audio interaction method and system. The advantage includes that within the vehicle predetermined distance range, an audio interaction interface is provided at the electronic device for the user to obtain the user audio interaction needs. Thus, the audio collection and the audio play can be accurately realized to improve application convenience.

Another purpose of the present disclosure is to provide position-based audio interaction method and system. The advantage includes that within the vehicle predetermined distance range, whether the audio interaction is performed can be indicated through the audio interaction interface of the electronic device for the user to improve the user experience.

Another purpose of the present disclosure is to provide position-based audio interaction method and system. The advantage includes that the audio interaction can start or stop automatically according to the user operation or the relative position relationship between the user and the vehicle. Thus, the user experience can be improved, and the power consumption of the vehicle can be reduced.

To realize the above purposes, embodiments of the present disclosure provide a position-based audio interaction method. The method includes, in response to detecting that a relative position relationship between an electronic device and a target vehicle meets a predetermined condition, displaying an interaction interface including an audio icon and generating an action detection instruction. The action detection instruction indicates a detection of a user action, and the target vehicle includes at least one external speaker. The method further includes, in response to detecting a predetermined activation action of a user, generating a sound collection instruction. The sound collection instruction indicates a collection of a sound signal of the user. The method further includes performing the sound collection instruction to collect and send the sound signal to an onboard controller corresponding to the target vehicle and outputting the collected sound signal by the at least one external speaker.

In some embodiments, the method further includes, before generating the sound collection instruction:
generating a wake-up instruction to be sent to the target vehicle, the wake-up instruction indicating wake-up of the onboard controller corresponding to the target vehicle.

In some embodiments, outputting the collected sound signal by the at least one external speaker further includes:
selecting a target speaker from the at least one external speaker based on the relative position relationship; and
outputting the collected sound signal by the target speaker.

In some embodiments, the predetermined activation action of the user includes any one of:
a first predetermined operation of the user for the audio icon; and
a second predetermined operation of the user for the electronic device.

In some embodiments, when the sound collection instruction is not performed, the audio icon is displayed as a first icon on the interaction interface; and
when the sound collection instruction is performed, the audio icon is displayed as a second icon on the interaction interface.

In some embodiments, the method further includes, after performing the sound collection instruction:
in response to detecting a predetermined deactivation action of the user, stopping the collection of the sound signal of the user.

In some embodiments, the method further includes, after displaying the interaction interface including the audio icon and generating the action detection instruction:
in response to detecting that the relative position relationship between the electronic device and the target vehicle does not meet the predetermined condition, hiding the interaction interface and/or stopping detection of the user action.

In some embodiments, the relative position relationship between the electronic device and the target vehicle is determined based on a UWB method.

To realize the above purposes, embodiments of the present disclosure further provide a position-based audio interaction method. The method includes, in response to detecting that a relative position relationship between an electronic device and a target vehicle meets a first position condition, displaying an interaction interface including an audio icon and generating a sound collection instruction. The sound collection instruction indicates a collection of a sound signal of a user, and the target vehicle includes at least one external speaker. The method further includes determining a relative position distance between a user face and the electronic device based on the collected sound signal, and in response to determining that the relative position distance between the user face and the electronic device meets a second position condition, generating a transmission instruction. The transmission instruction indicates transmission of the collected sound signal to an onboard controller corresponding to the target vehicle. The method further includes outputting the collected sound signal by the at least one external speaker.

In some embodiments, the method further includes, before generating the transmission instruction:
generating a wake-up instruction to be sent to the target vehicle, the wake-up instruction indicating wake-up of the onboard controller corresponding to the target vehicle.

In some embodiments, outputting the collected sound signal by the at least one external speaker further includes:
selecting a target speaker from the at least one external speaker based on the relative position relationship; and
outputting the collected sound signal by the target speaker.

In some embodiments, when the relative position distance between the user face and the electronic device does not meet the second position condition, the audio icon displayed at the interaction interface is a first icon; and
when the relative position distance between the user face and the electronic device meets the second position condition, the audio icon displayed at the interaction interface is a second icon.

In some embodiments, the method further includes, after determining the relative position distance between the user face and the electronic device:
in response to determining that the relative position distance between the user face and the electronic device does not meet the second position condition, stopping transmission of the collected sound signal.

In some embodiments, the method further includes, after displaying the interaction interface including the audio icon and generating the sound collection instruction:
in response to detecting that the relative position relationship between the electronic device and the target vehicle does not meet the first position condition, hiding the interaction interface and/or stopping the collection of the sound signal of the user.

In some embodiments, the relative position relationship between the electronic device and the target vehicle is determined based on a UWB method.

To realize the above purposes, embodiments of the present disclosure further provide a position-based audio interaction system, including an electronic device, an onboard controller arranged at a target vehicle, and at least one external speaker arranged at the target vehicle. The electronic device is configured to, in response to detecting that a relative position relationship between an electronic device and a target vehicle meets a predetermined condition, display an interaction interface including an audio icon and generate an action detection instruction, the action detection instruction indicating detection of a user action, in response to detecting a predetermined activation action of a user, generate a sound collection instruction, the sound collection instruction indicating a collection of a sound signal of the user, and perform the sound collection instruction to collect and send the sound signal to the onboard controller corresponding to the target vehicle. The onboard controller is communicatively connected to the at least one external speaker and configured to receive and send the collected sound signal to the at least one external speaker. The at least one external speaker is configured to output the collected sound signal.

In some embodiments, the electronic device further includes a first UWB communication module. The onboard controller includes a second UWB communication module. The first UWB communication module and the second UWB communication module establish a communication connection based on a UWB method and are configured to determine the relative position relationship between the electronic device and the target vehicle.

To realize the above purposes, embodiments of the present disclosure further provide a position-based audio interaction system, including an electronic device, an onboard controller arranged at a target vehicle, and at least one external speaker arranged at the target vehicle. The electronic device is communicatively connected to the onboard controller and configured to, in response to detecting that a relative position relationship between the electronic device and the target vehicle meets a first position condition, display an interaction interface including an audio icon and generate a sound collection instruction, the sound collection instruction indicating a collection of a sound signal of a user, determine a relative position distance between a user face and the electronic device based on the collected sound signal, and in response to determining that the relative position distance between the user face and the electronic device meets a second position condition, generate a transmission instruction. The transmission instruction indicates transmission of the collected sound signal to an onboard controller corresponding to the target vehicle. The onboard controller is communicatively connected to the at least one external speaker and configured to receive and send the collected sound signal to the at least one external speaker. The at least one external speaker is configured to output the collected sound signal.

In some embodiments, the electronic device can further include a first UWB communication module. The onboard controller includes a second UWB communication module. The first UWB communication module and the second UWB communication module establish a communication connection based on a UWB method and are configured to determine the relative position relationship between the electronic device and the target vehicle.

### BRIEF DESCRIPTION OF THE DRAWINGS

FIG. 1 is a schematic flowchart of a position-based audio interaction method according to some embodiments of the present disclosure.
FIG. 2 is a schematic diagram of a first icon according to some embodiments of the present disclosure.
FIG. 3 is a schematic diagram of a second icon according to some embodiments of the present disclosure.
FIG. 4 is a schematic flowchart of another position-based audio interaction method according to some embodiments of the present disclosure.
FIG. 5 is a schematic principle block diagram of a position-based audio interaction system according to some embodiments of the present disclosure.
FIG. 6 is a schematic principle block diagram of another position-based audio interaction system according to some embodiments of the present disclosure.

### DETAILED DESCRIPTION OF EMBODIMENTS

To make the purpose, technical solution, and advantages of the present disclosure clearer, the present disclosure is described in detail in connection with the accompanying drawings and embodiments. Specific embodiments described herein are only used to explain the present disclosure and are not intended to limit the present disclosure.

As described above, when a user needs to use a vehicle speaker as an audio output device, an in-vehicle cabin interaction can be adopted. Currently, no direct audio interaction method is provided between the user and the vehicle when the user is outside the vehicle. The outside-vehicle direct audio interaction includes that the user inputs an audio into the vehicle, and the vehicle broadcasts the sound to the outside through an external speaker (including but is not limited to a vibrating sound panel). Then, the vehicle can be used as a mobile speaker to satisfy application scenarios such as karaoke, real-time speech, etc.

However, on the one hand, currently, the vehicle can output or play related audio only through an in-vehicle speaker to outside. Thus, the user outside the vehicle cannot hear audio information clearly.

On the other hand, the cell phone and the vehicle are usually connected through technologies such as Bluetooth, radio-frequency identification (RFID), and WiFi. Thus, the following problems exist when the user performs direct audio interaction with the vehicle outside the vehicle.
1) Position accuracy problem. The connection method of the existing technology has a low distance measurement precision. Thus, the accurate positioning of the user can make it difficult to distinguish whether the user is in the vehicle or outside the vehicle. The audio interaction cannot be accurately designed.
2) Security problem. The connection method of the existing technology can be easily subject to relay attacks, which affects the security of using the vehicle.

Currently, Ultra-Wideband (UWB) technology is a wireless carrier communication technology that uses nanosecond-level non-sinusoidal narrow pulse to transmit data instead of a sinusoidal carrier wave. The UWB technology solved significant challenges in the propagation of wireless communication technology. The UWB technology has the advantages of not being sensitive to the signal channel fading, low density of a transmission signal power spectral, low interception rates, low system complexity, and the ability to provide centimeter-level positioning accuracy.

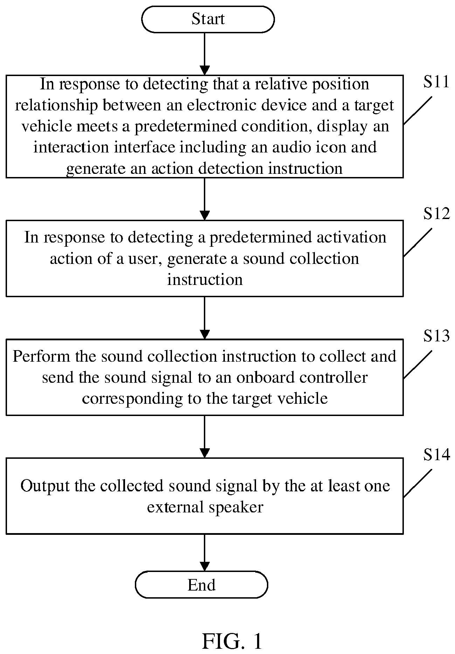

FIG. 1 is a schematic flowchart of a position-based audio interaction method according to some embodiments of the present disclosure. As shown in FIG. 1, in the position-based audio interaction method of the present disclosure, the action of the user is detected to activate a sound collection process. The audio interaction can refer to an interaction process with the user through a sound element/sound signal, which is not limited to voice but also includes other audio information such as music and a sound effect. The audio interaction may not include language. The user can interact with the system through sound attributes such as rhythm, melody, volume, and timbre. The method includes the following processes.

At S11, in response to detecting that a relative position relationship between the electronic device and the target vehicle satisfies a predetermined condition, an interaction interface including an audio icon is displayed, and an action detection command is generated. The action detection command is used to instruct the detection of the user action. The target vehicle includes at least one external speaker.

At S12, in response to detecting a predetermined wake-up action of the user, a sound collection instruction is generated. The sound collection instruction indicates the collection of the sound signal of the user.

At S13, the sound collection instruction is performed to collect the sound signal and send the sound signal to the in-vehicle controller corresponding to the target vehicle.

At S14, the collected sound signal is output through at least one external speaker.

As shown in FIG. 1, in some embodiments, an execution body of step S11 and step S12 is an electronic device.

The electronic device can include a wearable smart device including a smartphone, a tablet, smart glasses, a smart helmet, or a smartwatch.

As shown in FIG. 1, in some embodiments, the execution body of step S13 includes the electronic device or a related member of the electronic device.

The related member of the electronic device can include an external audio collection member connected to the electronic device through a wired or wireless connection including a headset, an earpiece, or a microphone.

As shown in FIG. 1, in some embodiments, the execution body of step S14 includes a target vehicle. Therefore, within a predetermined distance range of the vehicle, the electronic device or the related member of the electronic device can be used to collect the user audio and output and play the audio through the onboard external speaker according to the user operation. Thus, the vehicle can play audio to outside based on a sound amplification system of the vehicle.

Next, taking the electronic device being a cell phone as an example, the position-based audio interaction method of FIG. 1 is described in detail below.

At S11, in response to detecting that the relative position relationship between the electronic device and the target vehicle meets the predetermined condition, the interaction interface including the audio icon is displayed, and the action detection instruction is generated. The action detection instruction indicates the detection of the user action. The target vehicle includes at least one external speaker.

In some embodiments, the relative position relationship between the cell phone and the target vehicle can be determined through a near-field communication method based on Bluetooth positioning and/or UWB. In some embodiments, the relative position relationship between the cell phone and the target vehicle can be determined based on UWB.

The UWB can have higher precision in distance measurement compared to the RFID and Bluetooth technology, which can reach a centimeter level. In addition, the UWB technology can have high time resolution. The UWB can have strong anti-interference ability. An application frequency band for Bluetooth and WIFI can be 2.4GHz and can be interfered with by an external environment (e.g., the microwave can be also 2.4GHz). The frequency band for UWB can be 6.5G and 8G and may not be easily interfered with by the external environment. The timestamp of UWB can be accurate. Thus, UWB can be anti-interference in a plurality of ways. In a security aspect, UWB can have a protection ability over relay attacks, which benefits from the ability of UWB to accurately calculate the actual physical distance. If the flight time is determined to be long, the cell phone can be directly determined to be not in the effective range based on the UWB technology. Even if a signal interference is amplified, the cell phone can still not perform communication and audio interaction with the vehicle, and the attacker cannot cheat the cell phone and the vehicle.

When the relative position relationship between the cell phone and the target vehicle meets the predetermined condition, the screen of the cell phone can display the interaction interface including the first icon, and the action detection instruction is generated. The action detection instruction can indicate the detection of the user action.

The relative position relationship can refer to the relative distance relationship and the relative angle relationship between the electronic device (e.g., cell phone) and the target vehicle. When the relative position relationship meets a certain predetermined condition, the interaction interface can be displayed, and a further audio interaction process can be started. In some embodiments, the predetermined condition can be that the electronic device is outside the target vehicle.

In some embodiments, the predetermined condition can include that the electronic device is outside the vehicle and has a relative distance or a relative angle with the vehicle satisfying a predetermined range. For example, the predetermined condition can include that the cell phone is outside the vehicle and 20 m away from the vehicle. In some other embodiments, the predetermined condition can include that the cell phone is outside the vehicle and within 180° on the left side of the target vehicle. Thus, the audio interaction need of the user can be determined according to the relative position relationship between the electronic device and the target vehicle.

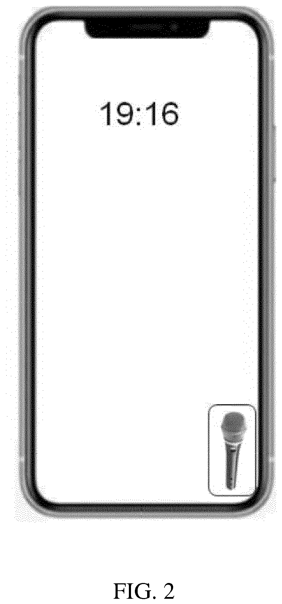

FIG. 2 is a schematic diagram of a first icon according to some embodiments of the present disclosure. The first icon in FIG. 2 is a small microphone icon. The first icon can be used to indicate that the electronic device is currently in an action detection state, for example, an action detection state of waking up/triggering the audio interaction function.

Before detecting the relative position relationship, identity authentication and matching need to be performed on the cell phone and the target vehicle and can be performed through UWB. Then, a remote device such as a cell phone can be used as a digital key.

When the UWB authentication is performed on the cell phone and the target vehicle, the onboard controller of the target vehicle can be in an inactive state, which can save the energy consumption of the target vehicle to a certain degree.

When the relative position relationship between the cell phone and the target vehicle is determined to meet the predetermined condition, the onboard controller of the target vehicle can be activated.

The cell phone can generate and send a wake-up instruction to the target vehicle. The wake-up instruction can indicate waking up the onboard controller corresponding to the target vehicle.

Furthermore, when the cell phone detects that the relative position relationship between the cell phone and the target vehicle does not meet the predetermined condition, the interaction interface can be hidden, and/or the detection of the user action can be stopped. Then, the cell phone can be considered to be away from the target vehicle a certain distance range, and the audio interaction can be stopped. Thus, the power consumption of the vehicle can be reduced, and the user experience can be improved.

At S12, in response to detecting a predetermined activation action of the user, the sound collection instruction is generated. The sound collection instruction indicates the collection of the sound signal of the user.

The cell phone can detect whether the user action meets the predetermined activation action. If the user action meets the predetermined activation action, the sound collection instruction can be generated to collect the sound signal of the user.

In some embodiments, the predetermined activation action can include any one of a first predetermined operation for the audio icon or a second predetermined operation for the electronic device.

In some embodiments, the first predetermined operation can include but is not limited to a single click, a double click, long pressing, strong pressing, circle, slide, or drag.

In some embodiments, the second predetermined operation can include but is not limited to shake or swing.

The sound collection instruction can instruct related members of the cell phone or electronic device such as headphones, headsets, and microphones to collect the user sound signal. Then, on one hand, the audio interaction need of the user can be determined according to the user action. On the other hand, a special-purpose microphone does not need to be provided, and the hands of the user can be further freed to cause the user to read the displayed content of the electronic device and perform the audio input clearly at the same time, which improves the user experience.

At S13, the sound collection instruction is performed to collect and send the sound signal to the onboard controller corresponding to the target vehicle.

The cell phone or the related members of the electronic device, such as the headphones and microphone, can perform the sound collection instruction to collect the sound signal of the user, and the sound signal can be sent to the target vehicle via the electronic device (e.g., cell phone). Further, when the cell phone or the related members of the electronic device, such as the headphones and microphone, perform the sound collection instruction, the sound signal of the user can be collected and sent to the onboard controller of the target vehicle by the electronic device (e.g., cell phone).

The collected sound signal can be sent to the target vehicle in a wireless communication method.

In some embodiments, when the collected sound signal is sent to the target vehicle in the wireless communication method, the transmission method is not limited to a UWB channel but also includes other wireless data transmission methods, such as Bluetooth, WIFI, and 4G/5G mobile communication network.

When the electronic device or the related member of the electronic device performs the sound collection instruction, the audio icon of the interaction interface can be displayed as a second icon.

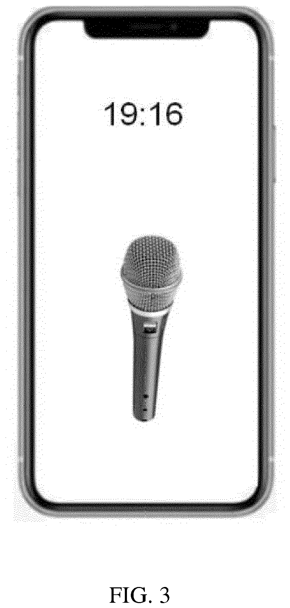

FIG. 3 is a schematic diagram of a second icon according to some embodiments of the present disclosure. As shown in FIG. 3, the second icon is a large microphone icon. The second icon can be used to indicate that the electronic device or the related member of the electronic device is currently executing the sound collection instruction. The two types of icons can be used to allow the user to direct know the device function activation state, which can improve the user experience.

Furthermore, the cell phone can detect whether the user action meets the predetermined deactivation action. If the user action meets the predetermined deactivation action, the collection of the sound signal of the user can be stopped. Thus, the user can start or stop the sound signal collection through action operations.

In some embodiments, the predetermined deactivation action of the user can include any of a first predetermined operation of the user for the audio icon and a second predetermined operation of the user for the electronic device.

In some embodiments, the first predetermined operation can include but is not limited to a single click, a double click, a long press, a heavy press, a circle select, a slide, or a drag.

The second predetermined operation can include but is not limited to shaking or tilting.

The predetermined activation action and the predetermined deactivation action can be set to corresponding operations. For example, the collection can start with a single click and can stop with a single click.

The predetermined activation action and the predetermined deactivation action may not be set to corresponding operations. For example, the collection can start with a single click and stop with a double click. In some other embodiments, the collection can start with a single click and stop by shaking the cell phone.

Further, when the user action meets the predetermined deactivation action, and after the collection of the sound signal of the user is stopped, if the user action meets the predetermined activation action, the collection of the sound signal of the user can start again, and the audio interaction process may not stop.

At S 14, the collected sound signal is output by at least one external speaker.

The plurality of external speakers of the vehicle can be used to output the collected sound signal of the user.

Further, the plurality of external speakers of the vehicle can output the collected sound signal of the user in real-time. The plurality of external speakers of the vehicle can also output the collected sound signal of the user with delay (e.g., 10min delay), at a set time (e.g., set to 18:00), or triggered based on a predetermined condition (e.g., detecting that the vehicle door is being knocked lightly or opened).

Further, since the UWB technology used in the present disclosure can be used to accurately obtain the relative position relationship, when the vehicle includes the plurality of external speakers, a target speaker can be selected to play the sound based on the accurate relative position relationship to satisfy the stereo surround sound broadcast effect of the vehicle.

In some embodiments, a target speaker can be selected according to the distance between the user and the vehicle. One or more external speakers nearest to the user can be selected as the target speakers. For example, when the vehicle includes four external speakers that are arranged symmetrically, 2 target speakers close to the user can be selected to play. When the user changes the position and moves to the other side of the vehicle, the other two target speakers close to the user can be selected to play. In some other embodiments, when the user is at a position that is within an angular range formed by any two neighboring speakers relative to the body center of the vehicle, the two neighboring speakers can be determined as the target speakers. For another example, when the vehicle includes four external speakers that are arranged symmetrically, the external speaker corresponding to the angle range where the user is can be selected as the target speaker to play. For example, when the user is in the 90° range at the left front of the vehicle, the external speaker at the left front can be determined as the target speaker. Further, the target speaker can be determined according to the orientation of the user. In some other embodiments, the target speaker can be determined according to the orientation of the user. One or more external speakers with the orientation the same as or reverse to the orientation of the user can be determined as the target speakers. For example, if the user faces south, the external speaker at the south can be selected as the target speaker. In some embodiments, the orientation of the user can be determined according to the direction of the moving trajectory or an orientation of the curve formed by the moving trajectory of the electronic device.

Then, the corresponding external speaker can be selected according to the relative position relationship between the user and the vehicle to output the sound information of the user to accurately control the sound amplification direction.

As shown in FIG. 2 and FIG. 3, the electronic device is a cell phone. Then, the position-based audio interaction method of FIG. 1 is described in detail.

When the relative position relationship between the cell phone and the target vehicle meets the predetermined condition, the interface of the cell phone can display the first icon as shown in FIG. 2 for the user to select.

When the user taps the first icon on the interface of the cell phone, the cell phone can detect the user tapping action and generate the sound collection instruction. Then, the microphone or headphones of the cell phone can start collecting the sound of the user, and the interface of the cell phone can display the second icon as shown in FIG. 3 to indicate that the audio collection and input are being performed.

The cell phone can send the collected sound signal to the target vehicle. The external speaker of the target vehicle can output the collected sound signal of the user.

When the user clicks the second icon on the interface of the cell phone, the collection of the sound of the user can be stopped. The interface of the cell phone can display the first icon as shown in FIG. 2, and the wireless microphone function can be closed. However, the user can click the first icon on the interface of the cell phone again to open the wireless microphone function again to start collecting the sound of the user. Thus, the audio collection and play can be accurately performed.

When the relative position relationship between the cell phone and the target vehicle no longer meets the predetermined condition, for example, the cell phone enters the vehicle or is away from the vehicle at a certain distance, the interaction interface can be hidden, and/or the detection of the user action can be stopped. The microphone icon on the interface of the cell phone can be hidden or disappear. On one hand, the power consumption of the cell phone/vehicle can be reduced, and on the other hand, the user experience can be improved.

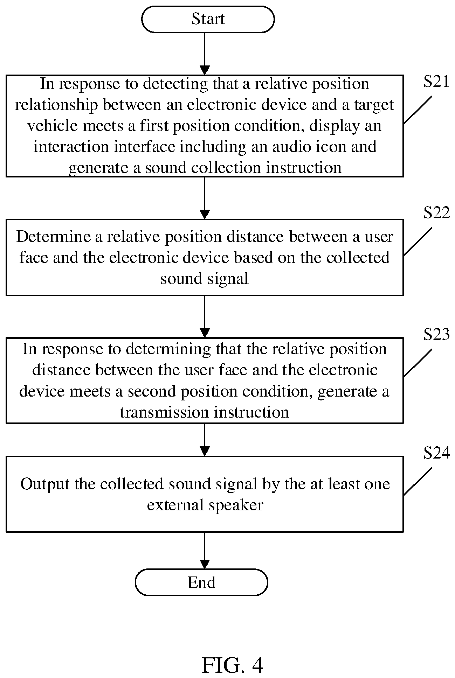

FIG. 4 is a schematic flowchart of another position-based audio interaction method according to some embodiments of the present disclosure. As shown in FIG. 4, the present disclosure provides a position-based audio interaction method. The user sound can be detected to determine the distance between the user face and the cell phone. The collected sound can be sent to the target vehicle when the user face is close to the electronic device, and the audio interaction with the target vehicle can be then started. In some embodiments, the method can include the following steps.

At S21, in response to detecting that the relative position relationship between the electronic device and the target vehicle meets a first position condition, the interaction interface including an audio icon is displayed, and the sound collection instruction is generated. The sound collection instruction indicates the collection of the sound signal of the user. The target vehicle includes at least one external speaker.

At S22, based on the collected sound signal, the relative distance between the user face and the electronic device is determined.

At S23, in response to determining that the relative distance between the user face and the electronic device meets a second position condition, a transmission instruction is generated. The transmission instruction indicates sending the collected sound signal to the onboard controller corresponding to the target vehicle.

At S24, the collected sound signal is output by at least one external speaker.

In some embodiments, as shown in FIG. 4, the execution body of step 21 to step 23 is an electronic device and/or related members of the electronic device.

The electronic device can include a wearable smart device such as a cell phone, a tablet, smart glasses, a smart helmet, or a smartwatch.

The related members of the electronic device can include external audio collection members, such as headphones, earphones, or microphones, that are connected to the electronic device via wired or wireless connections.

In some embodiments, as shown in FIG. 4, the execution body of step 24 is the target vehicle.

Taking the electronic device being the cell phone as an example, as shown in FIG.4, the position-based audio interaction method of the present disclosure is described in detail below.

At S21, in response to detecting that the relative position relationship between the electronic device and the target vehicle meets the first position condition, the interaction interface including the audio icon is displayed, and the sound collection instruction is generated. The sound collection instruction indicates the collection of the sound signal of the user. The target vehicle includes at least one external speaker.

In some embodiments, the relative position relationship between the cell phone and the target vehicle can be determined based on the UWB technology.

When the relative position relationship between the cell phone and the target vehicle is detected to meet the first position condition, the screen of the cell phone can display the interaction interface including the first icon, and the cell phone can start to collect the sound signal of the user.

In some embodiments, the sound signal of the user can be collected by the cell phone or the headphones connected to the cell phone.

The collected sound signal of the user can be used as the audio input signal and a determination signal for performing the sound field positioning on the relative position between the user face and the cell phone.

When the sound signal of the user collected by the headphones connected to the cell phone is used as the audio input, the sound signal of the user collected by the microphone of the cell phone can be used to perform the sound field positioning on the relative position between the user face and the cell phone.

In some embodiments, the first position condition can include that the electronic device or the related component of the electronic device (e.g., a cell phone or ear phone) is outside the vehicle, and the distance between the electronic device or the related component of the electronic device and the vehicle satisfies a first predetermined value (e.g., 20 m).

The first icon is the small microphone icon shown in FIG. 2.

Before detecting the relative position relationship, the identity authentication and matching may need to be performed on the cell phone and the target vehicle. The authentication can be performed through UWB, and the remote device such as a cell phone can be used as the digital key.

When the UWB authentication is performed between the cell phone and the target vehicle device, the onboard controller of the target vehicle can be in a non-wake-up state. Thus, the energy consumption of the target vehicle can be saved to a certain degree.

When the relative position relationship between the cell phone and the target vehicle is detected to meet the first position condition, the onboard controller of the target vehicle can be woken up.

The cell phone can generate and send the wake-up instruction to the target vehicle. The wake-up instruction can instruct the wake-up of the onboard controller corresponding to the target vehicle.

Furthermore, when the cell phone detects that the relative position relationship between the cell phone and the target vehicle does not meet the first position condition, the interaction interface can be hidden, and/or the collection of the sound signal of the user can be stopped. Then, the cell phone can be considered to be away from the target vehicle when the distance between the cell phone and the target vehicle exceeds the first predetermined value, and the audio interaction can be stopped.

At S22, based on the collected sound signal, the relative position distance between the user face and the electronic device is determined.

The cell phone can calculate the relative position distance between the user face and the cell phone based on the collected sound signal. When the relative position distance between the user face and the cell phone meets the second position condition, the user needs to activate the wireless microphone function to perform the audio interaction with the vehicle through the cell phone.

In some embodiments, the second position condition can include that the relative position distance between the user face and the cell phone satisfies a second predetermined value (e.g., within 5 centimeters).

In some embodiments, the second position condition can be predetermined.

At S23, in response to determining that the relative position distance between the user face and the electronic device meets the second position condition, the transmission instruction is generated. The transmission instruction indicates transmission of the collected sound signal to the onboard controller corresponding to the target vehicle.

When the cell phone detects that the relative position distance between the user face and the cell phone meets the second position condition, the cell phone can generate the transmission instruction to send the collected sound signal of the user to the target vehicle.

The collected sound signal can be sent to the target vehicle in the wireless communication method.

In some embodiments, the collected sound signal can be sent to the target vehicle in the wireless communication method including the UWB channel, the Bluetooth, WIFI, and 4G/5G mobile communication networks.

When the relative position distance between the user face and the cell phone meets the second position condition, the audio icon displayed on the interaction interface can be the second icon.

The second icon is the large microphone icon shown in FIG. 3.

Furthermore, when the cell phone detects that the relative position distance between the user face and the cell phone does not meet the second position condition, the transmission of the collected sound signal can be stopped.

Further, when the cell phone detects that the relative position distance between the user face and the cell phone meets the second position condition again after stopping the transmission of the collected sound signal, the cell phone can generate the transmission instruction again to send the collected sound signal.

Apparently, in the technical solution of embodiments of the present disclosure, the user sound can be actively collected and sent through the relative position distance between the user face and the electronic device. Compared to embodiments shown in FIG. 1, the operation of the user for the interaction interface can be reduced, which promotes the senseless audio interaction, improves the user experience, and reduces the energy consumption of the electronic device.

At S24, the collected sound signal is output by the at least one external speaker.

The plurality of external speakers included in the vehicle can output the collected sound signal of the user in real-time.

Furthermore, since the relative position relationship is accurately obtained using the UWB technology of the present disclosure, when the vehicle includes the plurality of external speakers, the determined target speaker can be selected to play sound based on the accurate relative position relationship to meet the stereo surround sound effect of the vehicle.

For example, when the vehicle includes 4 external speakers that are arranged symmetrically, two target speakers close to the user can be selected to play. When the user changes the position and moves to the other side of the vehicle, the other 2 target speakers close to the user can be selected to play.

Although the above method in the diagram is described in a series of actions for simplicity, the method is not limited by the sequence of the actions, because some actions can happen in a different order and/or concurrently with other actions that are illustrated and described herein or understood by those skilled in the art.

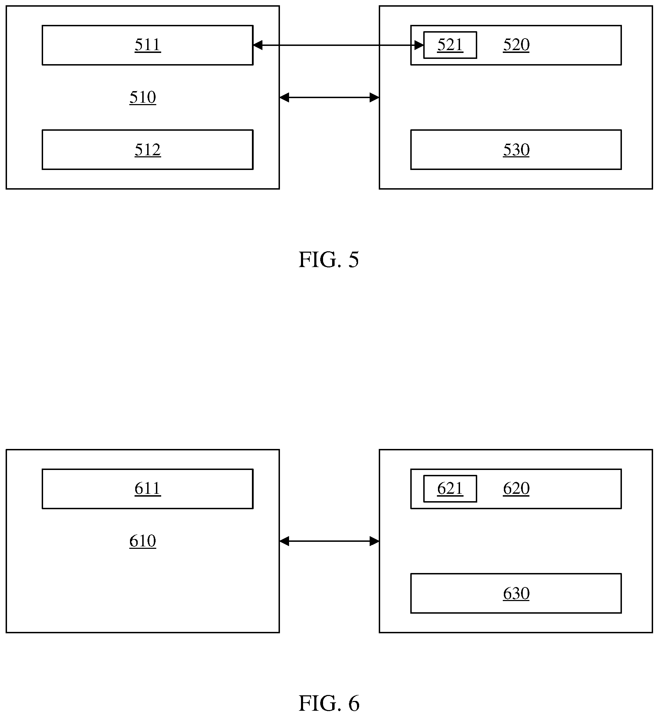

FIG. 5 is a schematic principle block diagram of a position-based audio interaction system according to some embodiments of the present disclosure. In some embodiments, as shown in FIG. 5, the position-based audio interaction system of the present disclosure includes an electronic device 510, an onboard controller 520 arranged at the target vehicle, and at least one external speaker 530.

The electronic device 510 can be communicatively connected to the onboard controller 520 and can be configured to respond to display the interaction interface including the audio icon and generate the action detection instruction in response to detecting that the relative position relationship between the electronic device 510 and the target vehicle meets the predetermined condition. The action detection instruction indicates the detection of the user action.

The electronic device can be further configured to generate the sound collection instruction in response to detecting the predetermined activation action of the user. The sound collection instruction can indicate the collection of the sound signal of the user.

The electronic device can be further configured to perform the sound collection instruction to collect and send the sound signal to the onboard controller 520 corresponding to the target vehicle.

The onboard controller 520 can be communicatively connected to the at least one external speaker 530 and configured to receive and send the collected sound signal to the at least one external speaker 530.

The at least one external speaker 530 can be configured to output the collected sound signal.

Further, the electronic device 510 includes a first UWB communication module 511. The onboard controller 520 includes a second UWB communication module 521.

The first UWB communication module 511 and the second UWB communication module 521 can establish a communication connection based on the UWB technology and be configured to determine the relative position relationship between the electronic device 510 and the target vehicle.

Further, the electronic device 510 includes an external audio collection member 512. The external audio collection member 512 can be configured to collect the sound signal of the user according to the sound collection instruction.

Further, since the accurate relative position relationship can be obtained using the UWB technology of the present disclosure, when the vehicle includes the plurality of external speakers 530, the determined target speaker can be selected to play sound based on the accurate relative position relationship to meet the stereo surround sound effect of the vehicle.

For example, when the vehicle includes the 4 external speakers that are arranged symmetrically, the two target speakers close to the user can be selected for playback. When the user changes the position and moves to the other side of the vehicle, the other two target speakers close to the user can be selected for playback.

FIG. 6 is a schematic principle block diagram of another position-based audio interaction system according to some embodiments of the present disclosure. In some embodiments, as shown in FIG. 6, the position-based audio interaction system of the present disclosure includes an electronic device 610, an onboard controller 620 arranged at the target vehicle, and at least one external speaker 630 arranged at the target vehicle.

The electronic device 610 can be communicatively connected to the onboard controller 620 and be configured to display the interaction interface including the audio icon and generate the sound collection instruction in response to detecting that the relative position relationship between the electronic device 610 and the target vehicle meets the first position condition. The sound collection instruction can indicate the collection of the sound signal of the user. The target vehicle can include at least one external speaker 630.

The electronic device 610 can be further configured to determine the relative position distance between the user face and the electronic device 610 based on the collected sound signal.

The electronic device 610 can be further configured to generate the transmission instruction in response to determining that the relative position distance between the user face and the electronic device 610 meets the second position condition. The transmission instruction can indicate the transmission of the collected sound signal to the onboard controller 620 corresponding to the target vehicle.

The onboard controller 620 can be communicatively connected to the at least one external speaker 630 and configured to receive and send the collected sound signal to the at least one external speaker 630.

At least one external speaker 630 can be configured to output the collected sound signal.

Further, the electronic device 610 includes a first UWB communication module 611, and the onboard controller 620 includes a second UWB communication module 621.

The first UWB communication module 611 and the second UWB communication module 621 can establish the communicative connection based on UWB and can be configured to determine the relative position relationship between the electronic device 610 and the target vehicle.

Further, since the accurate relative position relationship can be obtained using the UWB technology of the present disclosure, when the vehicle includes the plurality of external speakers 630, the determined target speaker can be selected for playback based on the accurate relative position relationship to meet the stereo surround sound effect of the vehicle.

For example, when the vehicle includes 4 external speakers that are arranged symmetrically, two target speakers close to the user can be selected for playback. When the user changes the position and moves to the other side of the vehicle, the other two target speakers close to the user can be selected for playback.

The present disclosure provides the position-based audio interaction method and the position-based audio interaction system. The cell phone can be used to replace the conventional microphone. The microphone of the cell phone can be activated within the accurate position distance range to playback the sound of the external speaker of the vehicle to realize the mobile speaker mode of the vehicle. The user outside the vehicle can make the vehicle have application functions such as karaoke outside the vehicle and real-time speech surrounding the vehicle using the microphone of the cell phone and the sound play function of the vehicle to the outside.

The position-based audio interaction method and the position-based audio interaction system of the present disclosure can have the following beneficial effects.

First, by providing the external speaker at the vehicle, the user can directly interact with the vehicle when being outside the vehicle. The user can make the vehicle to have the audio playback function to the outside using the microphone of the cell phone and the audio playback function to the outside of the external speaker of the vehicle.

Second, the relative position relationship determined based on the UWB method can have high accuracy and safety.

As indicated in the present disclosure and the claims unless explicitly indicated otherwise, the terms "one," "an," "a," and/or "the" do not specifically denote singular forms and may also include plural forms. In general, the terms "comprise" and "include" indicate the presence of stated steps and elements, but these steps and elements do not preclude the presence of other steps or elements. The method or apparatus can also include other steps or elements.

Those skilled in the art can further understand that various explanatory logic blocks, modules, circuits, and algorithm steps described in connection with embodiments disclosed herein can be implemented as electronic hardware, computer software, or a combination thereof. To clearly describe the interchangeability of hardware and software, various explanatory assemblies, frames, modules, circuits, and steps are described in a functional form. Such functionality can be implemented as hardware, software, or a combination thereof, depending on the specific application and the design constraints applied to the overall system. Those skilled in the art can implement the described functionality in different methods for a specific application. However, such implementation cannot be considered as departing from the scope of the present disclosure.

The various illustrative logic modules and circuits can be implemented or performed by a general-purpose processor, a digital signal processor (DSP), an application-specific integrated circuit (ASIC), a field programmable gate array (FPGA) or another programmable logic device, a discrete gate or transistor logic, discrete hardware assemblies, or any combination thereof designed to perform the functions described herein. A general-purpose processor can include a microprocessor. In some other embodiments, the processor can include any conventional processor, controller, microcontroller, or state machine. The processor can also be implemented as a combination of computing devices, such as a combination of a DSP and a microprocessor, a plurality of microprocessors, one or more microprocessors cooperating with a DSP core, or any other such configuration.

The steps of the method or algorithm described in connection with embodiments of the present disclosure can be embodied directly in hardware, in a software module executed by a processor, or in a combination thereof. Software modules can reside in RAM memory, Flash memory, ROM memory, EPROM memory, EEPROM memory, registers, hard drives, removable disk, CD-ROM, or any other form of storage medium known in the art. A storage medium can be coupled to the processor. Thus, the processor can read and write information from/to the storage medium. In some other embodiments, the storage medium can be integrated into the processor. The processor and storage medium can reside in an ASIC. The ASIC can reside in the user terminal. In some other embodiments, the processor and storage medium can reside as discrete assemblies in the user terminal.

In the present disclosure, unless otherwise stated and limited, the terms "installation," "connection," "coupled," "fixing," and other terms should be understood in a broad sense. For example, the terms can be understood as a fixed connection, a detachable connection, or an integral connection. The terms can be understood as a mechanical connection or an electrical connection. The terms can be understood as a direct connection, an indirect connection through an intermediate medium, or an internal connection between two elements. For those of ordinary skill in the art, the specific meanings of the above terms in the present disclosure can be understood according to specific circumstances.

The above embodiments are provided for those skilled in the art to implement or use the present disclosure. Those skilled in the art can make various modifications or changes to the above embodiments without departing from the inventive concept of the present disclosure. Therefore, the present disclosure is not limited to embodiments of the present disclosure, but should be subject to the maximum scope consistent with the innovative features mentioned in the claims.

## Claims

1. A position-based audio interaction method comprising:
in response to detecting that a relative position relationship between an electronic device and a target vehicle meets a predetermined condition, displaying an interaction interface including an audio icon and generating an action detection instruction, the action detection instruction indicating detection of a user action, and the target vehicle including at least one external speaker;
in response to detecting a predetermined activation action of a user, generating a sound collection instruction, the sound collection instruction indicating a collection of a sound signal of the user;
performing the sound collection instruction to collect and send the sound signal to an onboard controller corresponding to the target vehicle; and
outputting the collected sound signal by the at least one external speaker.

2. The method according to claim 1, further comprising, before generating the sound collection instruction:
generating a wake-up instruction to be sent to the target vehicle, the wake-up instruction indicating wake-up of the onboard controller corresponding to the target vehicle.

3. The method according to claim 1, wherein outputting the collected sound signal by the at least one external speaker further includes:
selecting a target speaker from the at least one external speaker based on the relative position relationship; and
outputting the collected sound signal by the target speaker.

4. The method according to claim 1, wherein the predetermined activation action of the user includes any one of:
a first predetermined operation of the user for the audio icon; and
a second predetermined operation of the user for the electronic device.

5. The method according to claim 1, wherein:
when the sound collection instruction is not performed, the audio icon is displayed as a first icon on the interaction interface; and
when the sound collection instruction is performed, the audio icon is displayed as a second icon on the interaction interface.

6. The method according to claim 1, further comprising, after performing the sound collection instruction:
in response to detecting a predetermined deactivation action of the user, stopping the collection of the sound signal of the user.

7. The method according to claim 1, further comprising, after displaying the interaction interface including the audio icon and generating the action detection instruction:
in response to detecting that the relative position relationship between the electronic device and the target vehicle does not meet the predetermined condition, hiding the interaction interface and/or stopping detection of the user action.

8. The method according to claim 1, wherein the relative position relationship between the electronic device and the target vehicle is determined based on a UWB method.

9. A position-based audio interaction method comprising:
in response to detecting that a relative position relationship between an electronic device and a target vehicle meets a first position condition, displaying an interaction interface including an audio icon and generating a sound collection instruction, the sound collection instruction indicating a collection of a sound signal of a user, and the target vehicle including at least one external speaker;
determining a relative position distance between a user face and the electronic device based on the collected sound signal;
in response to determining that the relative position distance between the user face and the electronic device meets a second position condition, generating a transmission instruction, the transmission instruction indicating transmission of the collected sound signal to an onboard controller corresponding to the target vehicle; and
outputting the collected sound signal by the at least one external speaker.

10. The method according to claim 9, further comprising, before generating the transmission instruction:
generating a wake-up instruction to be sent to the target vehicle, the wake-up instruction indicating wake-up of the onboard controller corresponding to the target vehicle.

11. The method according to claim 9, wherein outputting the collected sound signal by the at least one external speaker further includes:
selecting a target speaker from the at least one external speaker based on the relative position relationship; and
outputting the collected sound signal by the target speaker.

12. The method according to claim 9, wherein:
when the relative position distance between the user face and the electronic device does not meet the second position condition, the audio icon displayed at the interaction interface is a first icon; and
when the relative position distance between the user face and the electronic device meets the second position condition, the audio icon displayed at the interaction interface is a second icon.

13. The method according to claim 9, further comprising, after determining the relative position distance between the user face and the electronic device:
in response to determining that the relative position distance between the user face and the electronic device does not meet the second position condition, stopping transmission of the collected sound signal.

14. The method according to claim 9, further comprising, after displaying the interaction interface including the audio icon and generating the sound collection instruction:
in response to detecting that the relative position relationship between the electronic device and the target vehicle does not meet the first position condition, hiding the interaction interface and/or stopping the collection of the sound signal of the user.

15. The method according to claim 10, wherein the relative position relationship between the electronic device and the target vehicle is determined based on a UWB method.

16. A position-based audio interaction system comprising:
an electronic device;
an onboard controller arranged at a target vehicle; and
at least one external speaker arranged at the target vehicle;
wherein:
the electronic device is communicatively connected to the onboard controller and is configured to:
in response to detecting that a relative position relationship between an electronic device and a target vehicle meets a predetermined condition, display an interaction interface including an audio icon and generate an action detection instruction, the action detection instruction indicating detection of a user action;
in response to detecting a predetermined activation action of a user, generate a sound collection instruction, the sound collection instruction indicating a collection of a sound signal of the user; and
perform the sound collection instruction to collect and send the sound signal to the onboard controller corresponding to the target vehicle;
the onboard controller is communicatively connected to the at least one external speaker and configured to receive and send the collected sound signal to the at least one external speaker; and
the at least one external speaker is configured to output the collected sound signal.

17. The system according to claim 16, wherein:
the electronic device further includes a first UWB communication module;
the onboard controller further includes a second UWB communication module; and
the first UWB communication module and the second UWB communication module establish a communication connection based on a UWB method and are configured to determine the relative position relationship between the electronic device and the target vehicle.

18. The system according to claim 16, wherein the electronic device further includes:
an external audio collection member configured to collect the sound signal of the user according to the sound collection instruction.

19. A position-based audio interaction system comprising:
an electronic device;
an onboard controller arranged at a target vehicle; and
at least one external speaker arranged at the target vehicle;
wherein:
the electronic device is communicatively connected to the onboard controller and configured to:
in response to detecting that a relative position relationship between the electronic device and the target vehicle meets a first position condition, display an interaction interface including an audio icon and generate a sound collection instruction, the sound collection instruction indicating a collection of a sound signal of a user, and the target vehicle including the at least one external speaker;
determine a relative position distance between a user face and the electronic device based on the collected sound signal; and
in response to determining that the relative position distance between the user face and the electronic device meets a second position condition, generate a transmission instruction, the transmission instruction indicating transmission of the collected sound signal to an onboard controller corresponding to the target vehicle;
the onboard controller is communicatively connected to the at least one external speaker and configured to receive and send the collected sound signal to the at least one external speaker; and
the at least one external speaker is configured to output the collected sound signal.

20. The system according to claim 19, wherein:
the electronic device further includes a first UWB communication module;
the onboard controller includes a second UWB communication module;
the first UWB communication module and the second UWB communication module establish a communication connection based on a UWB method and are configured to determine the relative position relationship between the electronic device and the target vehicle.
